# EUROPEAN PATENT APPLICATION

(11) **EP 1 770 148 A1**
(43) Date of publication of application: **04.04.2007**
(21) Application number: 06019620.1
(22) Date of filing: 20.09.2006
(51) Int. Cl.: C10G 1/10

(54) **Method and apparatus for producing oil from waste plastic**

(30) Priority: 03.10.2005 JP 2005289841
(71) Applicant: CHUNG BONG, ChOON, Nagata-ku Kobe city Hyogo (JP); Yoshitaka, Takata, Nagata-ku Kobe-city Hyogo (JP)
(72) Inventor: Chung Bong Choon, Kobe city, Hyogo pref. (JP)
(74) Representative: Knoblauch, Andreas

(57) **Abstract**

The present invention provides a method for producing oil from waste plastic, in which, when waste plastic is introduced into a thermal decomposition chamber and mixed with a high-temperature solvent to carry out thermal decomposition, the solvent is heated more uniformly within a shorter time and blended oil generated in the thermal decomposition chamber can be cooled more uniformly within a shorter time. The present invention also provides an apparatus for producing oil from waste plastic, which utilize such a novel method. The method and apparatus for producing oil from waste plastic are those each configured such that a first circulation device having a circulation chamber 12 and a heating device 13, which can be functioned to heat and store a solvent, and a second circulation device capable of supplying purified lower-temperature blended oil are connected to each of the thermal decomposition chambers 10 and 30, where a high-temperature solvent is continuously flowed until it is completely decomposed, while it can be cooled when the decomposed oil generated is discharged.

## Description

### FIELD OF THE INVENTION

The present invention relates to a method and apparatus for producing oil from waste plastic.

### BACKGROUND OF THE INVENTION

Waste plastic is converted to decomposed oil (in a state of being mixed with a solvent) when it is placed in an oily substrate heated at about 200°C. When the decomposed oil is vaporized and then cooled down to be condensed into a liquid, it can be recovered as blended oil (oily substance which cannot be classified into kerosene, light oil, or the like), which can be reusable in fuel or the like.

Furthermore, the present inventors have already filed a patent application with respect to a method and apparatus for producing oil from waste plastic, where two thermal composition chambers are driven with staggered driving cycles and a solvent, the amount thereof is much more than the amount of waste plastic introduced, is circulated in these chambers to continuously carry out both thermal decomposition and cooling, thereby allowing an increase in amount of the blended oil recovered (see, for example, Japanese Patent No. 3654833 (pages 1-6, Fig. 1)).

When the waste plastic is mixed with the high-temperature solvent, decomposed oil can be obtained. However, as far as the decomposed oil is being hot, it may be in danger of firing when exposed to air. Therefore, it is necessary to lower the temperature of the decomposed oil at the time of drawing out of the thermal decomposition chamber. For this reason, the conventional apparatus comprises a water-cooling type cooling device installed on a thermal decomposition chamber.

The oil-producing apparatus described in Patent Document 1 described above is also configured such that a water-cooling jacket is arranged on the periphery of the thermal decomposition chamber to allow coolant water to circulate to cool the decomposed oil in the thermal decomposition chamber.

Furthermore, for heating the solvent up to a predetermined temperature, a heating oven having a burner on the outside thereof is employed to set fire to oil or gas.

In the conventional heating oven system comprising a burner on the outside thereof, it is difficult to heat a solvent or the like in the inside of the system uniformly in a short time.

Furthermore, in the water-cooling system in which a water-cooling jacket is mounted on a thermal decomposition chamber to carry out water-cooling from the outside of the chamber, it is difficult to cool the blended oil in the chamber uniformly in a short time.

### SUMMARY OF THE INVENTION

Accordingly, an object of the present invention is, in consideration of the above problems, to provide a method and apparatus for producing oil from waste plastic, where, when the waste plastic is introduced into a thermal decomposition chamber and them mixed with a high-temperature solvent, a solvent can be heated more uniformly in a shorter time and blended oil generated in the thermal decomposition chamber can be cooled more uniformly in a shorter time.

For attaining the above object, a first aspect of the present invention is a manufacturing method of oil by thermal decomposition of waste plastic with a high-temperature solvent to obtain refined oil from the waste plastic, where a thermal decomposition chamber having an output port for decomposed oil provided with a closable gate for separating intact plastic from a solid impurity is connected to a first circulation device having functions of heating and storing the solvent to allow the high-temperature solvent to flow continuously until it is completely decomposed, while, via a second circulation device capable of supplying purified, the normal-temperature blended oil is supplied to the thermal decomposition chamber to cool down the decomposed oil.

According to the first aspect of the invention configured as described above, the concentration of decomposed oil is hardly increased around the waste plastic to be introduced in the thermal decomposition chamber because a high-temperature solvent is continuously flowed by the first circulation device. Therefore, the decomposition of waste plastic can be facilitated. In addition, by supplying normal-temperature blended oil purified in the decomposed oil being heated at high temperature, it can be cooled more evenly in a shorter time without using any specific cooling device.

In a second aspect of the invention, the first circulation device comprises a heating device, a circulation chamber for storing the solvent, and a circulation channel for connecting both of them to the thermal decomposition chamber, and the second circulation chamber is disconnectable from both the circulation chamber and the heating device.

According to the second aspect of the invention configured as described above, the devices are shared to make possible to lower costs and also refined blended oil can be heated and used as a solvent.

In a third aspect of the invention, both of the thermal decomposition chambers are employed to dissolve the waste plastic poured into each thermal decomposition chamber in the solvent heated at a predetermined temperature to produce decomposed oil; while cooling down one of the thermal decomposition chambers, the other of the thermal decomposition chambers allows the solvent to be heated by the heating device and to be circulated through the circulation chamber to carry out thermal decomposition of additionally-introduced waste plastic; and all of decomposed oil and solid impurity are drawn from a separator while being cooled down to a predetermined temperature by the normal-temperature blended oil.

According to the third aspect of the invention configured as described above, while the decomposed oil is discharged by one thermal decomposition chamber, thermal decomposition can be carried out in the other thermal decomposition chamber. Therefore, the method for producing oil from waste plastic can be provided as one capable of carrying out continuous purification.

A fourth aspect of the present invention is an oil-producing apparatus, which thermally decomposes waste plastic in a high-temperature solvent to obtain refined oil from the waste plastic, comprising: a thermal decomposition chamber that retains the high-temperature solvent and receives the introduction of waste plastic, where the thermal decomposition chamber is connected to a first circulation device having a function of moving a solvent in a thermal decomposition chamber and a second circulation device capable of supplying blended oil at ordinary temperature from a product-receiving chamber storing the purified blended oil, wherein a circulation chamber capable of storing a solvent having a capacity about 10 times higher than that of the thermal decomposition chamber, a first heating device for heating the solvent up to a predetermined temperature, and a pump are arranged as common instruments for each of the first circulation device and the second circulation device, and a separating device for separating the decomposed oil from the solid impurity is connected to an output port for decomposed oil of the thermal decomposition chamber through a closable gate.

According to the fourth aspect of the invention configured as described above, a large amount of the solvent can be circulated. Thus, the purified normal-temperature blended oil, which can thermally decompose a large amount of waste plastic in a short time without causing an increase in concentration of decomposed oil. Therefore, the apparatus for producing oil from waste plastic, which allows cooling more evenly in a shorter time, can be obtained. Furthermore, the purified blended oil can be recycled, so that an apparatus for producing oil from waste plastic can be provided as one that allows an increase in purity of the product.

In a fifth aspect of the invention, two thermal decomposition chambers are placed and connected to the first circulation device and the second circulation device, respectively, in a switchable manner.

According to the fifth aspect of the invention configured as described above, it is possible to construct an oil-producing apparatus capable of continuous purification, which is able to be controlled such that, while decomposed oil is discharged by one of the thermal decomposition chambers, thermal decomposition is carried out in the other thermal decomposition chamber.

In a sixth aspect of the invention, the apparatus further comprises: a second heating device for heating the decomposed oil, provided as a device for purifying the decomposed oil out of the separating device; and an evaporation chamber having a device for enlarging the surface area of the decomposed oil heated by the second heating device.

According to the sixth aspect of the invention configured as described above, the evaporation of decomposed oil can be facilitated, thereby allowing efficient purification.

In a seventh aspect of the invention, the first heating device and the second heating device are provided as devices for controlling heating temperatures, having: a heat-generating member arranged in the heating chamber, provided with a screw-type heat-generating plate on a spindle, and made of an electroconductive steel product; and a control device arranged on the outside of the heating chamber is provided for supplying a predetermined electric power to the heat-generating member on the basis of information about temperature from a temperature sensor arranged on the outlet side of a heating fluid in the heating chamber.

According to the seventh aspect of the invention configured as described above, the heating fluid (solvent, decomposed oil, or refined oil), which flows along a screw-type heat-generating plate, can be evenly heated as quickly as possible.

In an eighth aspect of the invention, a plurality of the heat-generating members are arranged in parallel to the direction of flow in the heating chamber and placed at positions that divide the inside of the heating chamber almost evenly.

According to the eighth aspect of the invention, even though a large-sized heating chamber having a large diameter is used, the heating fluid (solvent, decomposed oil, or refined oil), which flows in the heating chamber, can be heated more evenly.

As described above, according to the present invention, a thermal decomposition chamber is connected to a first circulation device having a circulation chamber and a heating device to exert functions of heating and storing the solvent and a second circulation device capable of supplying normal-temperature blended oil purified to allow the high-temperature solvent to flow continuously until it is completely decomposed, while the decomposed oil can be cooled by supplying the normal-temperature decomposed oil generated in the thermal decomposition chamber more evenly within a shorter period. Therefore, the method and apparatus for producing oil from waste plastic can be obtained.

### BRIEF DESCRIPTION OF THE DRAWINGS

Fig. 1 is a process flow diagram of an apparatus for producing oil from waste plastic in accordance with the present invention;

Fig. 2 is a process flow diagram of an apparatus for producing oil from waste plastic in accordance with the present invention; and

Fig. 3 is a schematic diagram of a hating device according to the present invention, where (a) is a side view and (b) is a cross-sectional view.

### DETAILED DESCRIPTION OF PREFERRED EMBODIMENTS

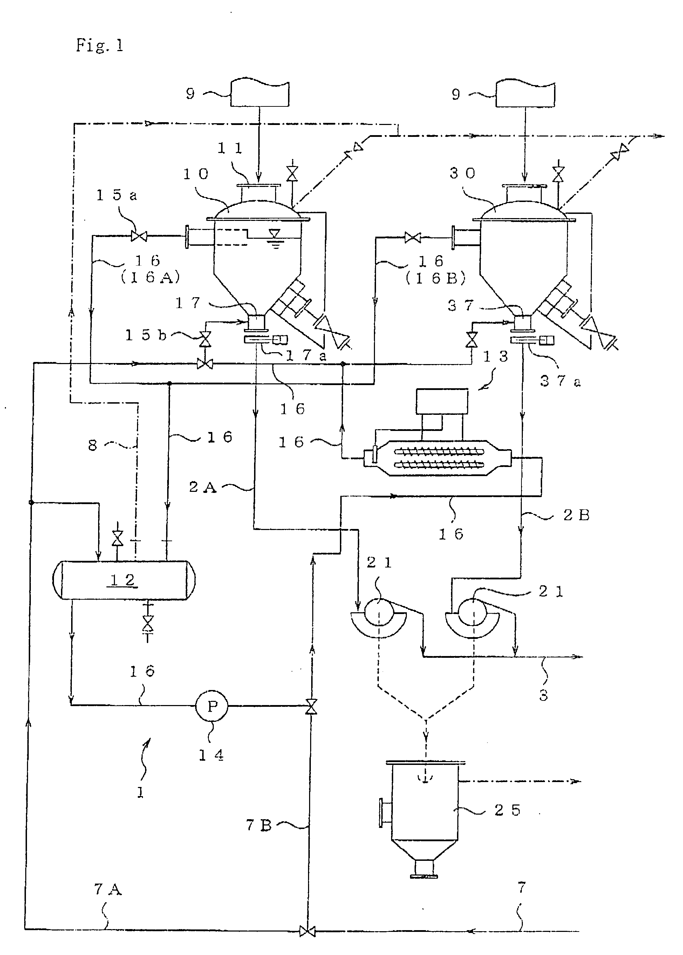

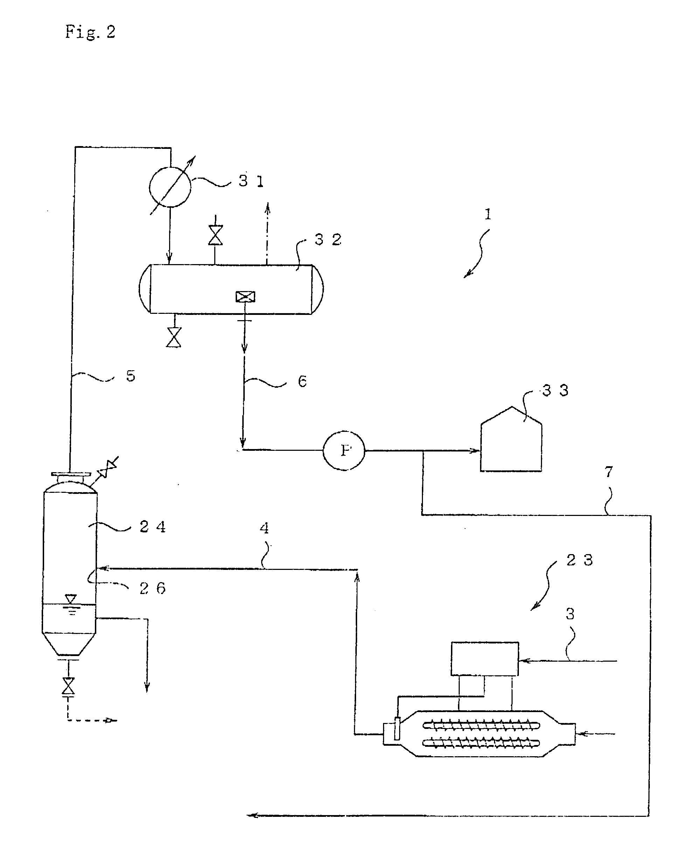

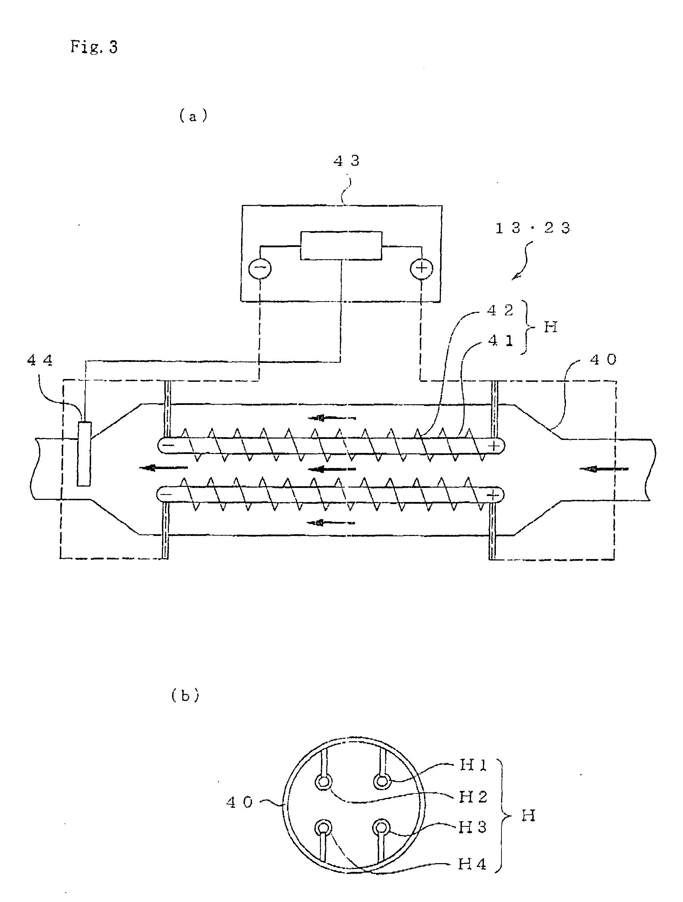

Hereinafter, embodiments of the method and apparatus for producing oil from waste plastic according to the present invention will be described in details with reference to the attached figures. Fig. 1 and Fig. 2 are process flow diagrams of an apparatus for producing oil from waste plastic. Fig. 3 is a schematic diagram of a hating device according to the present invention, where (a) is a side view and (b) is a cross-sectional view.

At first, the apparatus for producing oil from waste plastic of the present invention will be described with reference to Fig. 1 and Fig. 2. Waste plastic (e.g., a plastic waste product containing PE, PP, and PS as principal components and partially PVC) being contaminated with small pieces of solid impurities (e.g., wastes of paper, wood, clothes, skins, stones, sands, metal, earthenware, plant leavings, and animal leavings), for example in an amount of 400 kg, is introduced into a crushing machine (not shown). Subsequently, the waste plastic is roughly crushed into pieces of about 30 mm x 30 mm in size and then placed and concentrated in a solidifying device 9 for volume reduction, thereby resulting in waste plastic in pellet form having a specific gravity of approximately 0.6 to 0.7.

The rate of processing waste plastic in a pre-processing device including the crushing machine and the solidifying device 9 for volume reduction is 800 kg per hour, so that such a pretreatment can reduce the bulk of waste plastic almost in half. Subsequently, the processed waste plastic in pellet form, 400 kg, is introduced into a thermal decomposition chamber 10 (30) from an input port 11.

The thermal decomposition chamber 10 has a conical bottom portion provided with an output port 17 together with a closable gate 17a. The inside of the chamber 10 is connected to a circulation channel 16 (16A or 16B) and in fluid communication with a first circulation device that comprises a circulation chamber 12 for storing a solvent (an oily substance such as coal oil or waste oil), a first heating device 13 having a heat-generating member therein to heat the solvent to a predetermined temperature, and a pump 14, and valves 15a and 15b.

When the valves 15a and 15b are opened and the pump 14 is then actuated while the closable gate 17a is being closed, the solvent is fed from the circulation chamber 12 with a capacity equal to 4,000 kg of the solvent (i.e., almost 10 times the capacity of the thermal decomposition chamber 10) to the thermal decomposition chamber 10 through the heating device 13. Then, the solvent is heated up to 200°C. At this time, the solvent is always in a fluid state, so that the solvent will not burn and stick during heating.

The pelletized waste plastic in the thermal decomposition chamber 10 is dissolved in the solvent heated at 200°C and converted to decomposed oil. The intact plastic and the solid impurities remain in the thermal decomposition chamber 16, so that only the generated decomposed oil and the solvent may be circulated through the circulation channel 16 and then heated up to 200°C again by the heating device 13, followed by returning to the thermal decomposition chamber 10. At this time, in the thermal decomposition chamber 10, the solvent (including the decomposed oil) moves continuously. Besides, the total capacity of the thermal decomposition 10, the circulation chamber 12, and the like allows the circulation of 4,000 kg or more of the solvent. Therefore, the concentration of the solvent around the waste plastic can be hard to rise and thus no substantial decrease in decomposition rate occurs.

As described above, the apparatus is configured such that the high-temperature solvent flows continuously to carry out thermal decomposition by the first circulation device having functions of heating and storing the solvent through the circulation chamber 12 and the circulation channel 16 connected to the first heating device 13. Therefore, the oil can be completely decomposed.

In each of the thermal decomposition chamber 10 and the circulation chamber 12, chlorine is generated in a gaseous form from waste plastic. The chlorine-containing gas generated in these steps is fed from the upper portions of the respective chambers 10 and 12 to a gas-absorption chamber (not shown). Subsequently, the gas is drained after washing with alkali.

In this way, the solvent (including the decomposed oil) was circulated constantly for about 30 minutes to completely decompose the waste plastic introduced into the thermal decomposition chamber 10, and the circulation channel 16 is then blocked by closing the valves 15a and 16b. Subsequently, the decomposed oil generated in the thermal decomposition chamber 10 is cooled down.

As far as the decomposed oil is being hot, it may be in danger of firing when exposed to air. Therefore, it is necessary to lower the temperature of the decomposed oil at the time of drawing out of the thermal decomposition chamber 10.

The present embodiment is configured such that normal-temperature blended oil, which is purified and temporarily stored in a product-receiving tank 32, is supplied to the high-temperature decomposed oil to quickly cool down the decomposed oil.

After confirming that the decomposed oil is cooled down to almost normal temperature by means of a thermometer (not shown), the closable gate 17a on the bottom portion of the thermal decomposition chamber is opened to feed all of the decomposed oil and the solid impurities in the thermal decomposition chamber 10 to a centrifugal separator 21. If the temperature of the decomposed oil is lowered to normal temperature, it is not fired when exposed to air.

The process of thermal decomposition and cooling for about 60 minutes up to here is defined as one cycle. Two thermal decomposition chambers 10 and 30 having the same structure are set up to be driven with staggered half cycles (i.e., 30 minutes), respectively. As in the case of the thermal decomposition chamber 10, the thermal decomposition chamber 30 comprises an input port 11, a closable gate 37a, and an output port 37 as well as a processing device having a solidifying device 9 for volume reduction.

In the present embodiment, two thermal decomposition chambers 10 and 30 are driven with only staggered half cycles (i.e., 30 minutes), respectively. While decomposed oil in the thermal decomposition chamber 10 is cooled down, the other thermal decomposition chamber 30 can thermally decompose 400 kg of waste plastic additionally pre-processed and introduced by circulating the solvent between the thermal decomposition chamber 30 and the circulation chamber 12. Repeating such steps alternately, an oil-producing apparatus as a whole is allowed to carry out successive thermal decompositions of 400 kg of waste plastic.

Consequently, the flows of decomposed oil mixed with solid impurities are supplied to the centrifugal separator 21 from two thermal decomposition chambers 10 and 30 alternately with staggered half cycles (every 30 minutes) through the respective lines 2A and 2B. The separator separates a decomposed oil fraction from a solid impurity fraction. The isolated decomposed oil is then heated to a predetermined temperature while passing through from a line 3 to a second heating device 23, followed by feeding to an evaporation chamber 24 from which the remaining solid impurities fall into a waste liquid chamber 25 and are then subjected to thermal disposal. Chlorine-containing gas generated in the waste liquid chamber 25 or generated in thermal disposal is washed over with alkali in a gas-absorbing chamber (not shown) and then drained off together with the processing solution.

The decomposed oil fed to the heating device 23 is heated to about 360°C or more during the process of allowing the decomposed oil to flow along a heat-generating screw plate described later and then fed to the evaporation chamber 24. At this time, as the decomposed oil is flowing continuously, it will not burn and stick during heating.

Furthermore, the decomposed oil is falls as it drips little by little into the evaporation chamber 24 from an oil-feeding orifice 26 having a small diameter formed in the top portion of the evaporation chamber 24. In this way, the decomposed oil falls in a fine-drawn or droplet form, so that the decomposed oil can be quickly evaporated as it is heated at a high temperature of about 360°C or more in addition to having a larger surface area, compared with the case in which evaporation is carried out only from the surface of decomposed oil stored in the thermal decomposition chamber, like the case of the conventional oil-producing apparatus.

The vaporized decomposed oil, which is generated from the evaporation chamber 24, is fed to a condenser 31 via line 5. On the other hand, the unvaporized decomposed oil is fed back to the heating device 23 via a circulation channel (not shown). The vaporized decomposed oil fed to the condenser 31 is condensed by coolant water, thereby forming good blended oil. After removal of moisture from the blended oil, it is recovered into a product-receiving chamber 32. Furthermore, after removal of chlorine gas from the chamber 32, it is fed as refined oil to a product tank 33 through a line 6 having a pump. In the present embodiment, blended oil to be purified is recovered in a rate of about 1 m³/h. Furthermore, the centrifugal separator 21 removes the solid impurities effectively from the blended oil recovered by the oil-producing apparatus, so that high-quality blended oil (refined oil) can be obtained, compared with the conventional one.

Furthermore, the present embodiment is configured to feed the blended oil temporarily recovered in the product-receiving tank 32 to each of the thermal decomposition chambers 10 and 30 and to cool the decomposed oil therein.

The second circulation device is a means of feeding the blended oil recovered in the product-receiving tank 32 to each of the thermal decomposition chambers 10 and 30 and comprises circulation channels 7, 7A, and 7B, a circulation chamber 12, and a pump 14.

In the present embodiment, the circulation chamber 12 and the pump 14 arranged in the first circulation device are also used as those of the second circulation device. Alternatively, these instruments may be prepared specific for the second circulation device. However, they may be configured as common instruments for the first and second circulation devices by means of the connection between their circulation channels, favorably allowing the costs of the instruments to be cut down.

The blended oil recovered in the product-receiving tank 32 remains at normal (room) temperature, so that the high-temperature decomposed oil in the respective thermal decomposition chambers 10 and 30 can be quickly and uniformly cooled down when the blended oil is fed to the chambers 10 and 30 through the circulation channels 7, 7A, and 7B, respectively. Consequently, the cooling process having such a configuration is able to cut down the costs of instruments because of no need of arranging a specific cooling device.

Furthermore, the normal temperature blended oil can be also supplied to the first heating device 13, and thus the blended oil heated at predetermined temperature can be fed to each of the thermal decomposition chambers 10 and 30.

In other words, the present embodiment is configured such that the normal temperature blended oil may be used as a cooling device or may be used as a high-temperature solvent.

It is preferable to feed the once-purified blended oil as a solvent to the thermal decomposition chamber again because the blended oil having higher purity can be purified.

Next, the heating devices that can be used in the present invention will be described with reference to Fig. 3.

Both the first heating device 13 for heating the solvent up to a predetermined temperature (200°C or more) and the second heating device 23 for heating the decomposed oil up to a predetermined temperature (360°C or more) are heating devices having the same structure, and capable of being set to different heating temperatures based on different fluids to be heated.

As shown in Fig. 3(a), each of the heating devices 13 and 23 is provided with the screw type heat-generating plate 42 on a spindle in a heating chamber 40 and also provided with a heat-generating member H made of an electroconductive steel product. In addition, a temperature sensor 44 is placed on the side of an outlet for a heating fluid in the heating chamber, while a control device 43 for supplying a predetermined amount of electric power to the heat-generating member H is placed on the outside of the heating chamber. In this way, the heating devices 13 and 23 are used as heat-controlling means which can heat the heating fluid up to a predetermined temperature.

As the heat-generating member H is arranged in parallel to the flow of the heating fluid in the heating chamber, the heating fluid can be smoothly flowed in whirls along the screw type heat-generating plate. Therefore, the heating fluid (e.g., solvent, decomposed oil, or blended oil) can be heated quickly in a uniform manner. Furthermore, if the heating chamber 40 has a larger inner diameter, it is preferable to place two or more heat-generating members at regular intervals. In the present embodiment, as shown in Fig. 3 (b), it is configured such that four heat-generating member H (H1, H2, H3, and H4) are arranged in parallel in the direction of flow in the heating chamber to almost evenly divide the inside of the heating chamber 40 into parts.

According to the above configuration, even in the case of a larger heating chamber having a larger diameter, it is preferable to heat the heating fluid (e.g., solvent, decomposed oil, or blended oil), which is flowing in the heating chamber, so that it can be heated more evenly. In addition, the number of the heat-generating members H placed is not specifically limited since it is enough to heat the heating fluid (e.g., solvent, decomposed oil, or blended oil), which is flowing in the heating chamber, more evenly.

Each of the heat-generating members H, the control device 43, and the temperature sensor 44 are designed to correspond with temperatures of up to 200°C to 400°C. Thus, for instance, it is possible to set these members such that the solvent can be heated up to 200°C or the decomposed oil can be heated up to 360°C without limitation.

As the screw-type heat-generating plate 42 that constitutes the heat-generating member H is placed, the heating fluid can be flowed in whirls along the surface of the screw-type heat-generating plate, thereby allowing the heating fluid to be heated with gentle stirring. Therefore, the heating fluid can be heated evenly all over.

Furthermore, as the temperature sensor 44 is placed on the side of the outlet for the heating fluid in the heating chamber, the temperature of the heating fluid can be measured precisely. In addition, the supply of electric power is automatically controlled until the measured temperature reaches a predetermined temperature. Therefore, an automatic control can be established such that, depending on the amount or temperature of the heating fluid to be supplied, it can be automatically responded and then heated up to a uniform temperature, followed by discharging.

As described above, the method for producing oil from waste plastic in accordance with the present invention is configured such that a fist circulation device having functions of heating and storing a solvent and a second circulation device capable of supplying refined oil at normal temperature are connected to a thermal decomposition chamber to continuously flow the high-temperature solvent until it can be completely dissolved, while purified, normal-temperature blended oil is supplied to cool down at the time of discharging the decomposed oil generated. Therefore, the method for producing oil from waste plastic thus provided facilitates thermal decomposition of waste plastic and is able to cool down the decomposed oil within a short time and to discharge it out.

Furthermore, using two thermal decomposition chambers to produce and cool decomposed oil alternately allows the method for producing oil from waste plastic to be capable of continuously producing refined oil.

Furthermore, the apparatus for producing oil from waste plastic in accordance with the present invention is configured such that there is provided a first circulation device having a function of moving a solvent in a thermal decomposition chamber and a second circulation device capable of supplying normal-temperature blended oil from a product-receiving chamber for storing purified blended oil are connected to the thermal decomposition chamber; and a circulation chamber capable of storing a solvent having a capacity about 10 times higher than that of the thermal decomposition chamber, a first heating device for heating the solvent up to a predetermined temperature, and a pump are arranged as common instruments for each of the first and second circulation devices, while an output port for decomposed oil from the thermal decomposition chamber is connected to a device for separating the decomposed oil from solid impurities via a closable gate. Therefore, it becomes possible to circulate a large amount of the solvent, so that a large amount of waste plastic can be thermally decomposed at once without causing an increase in density of decomposed oil. Therefore, only the decomposed oil can be drawn out. Furthermore, the purified, normal-temperature blended oil is recirculated, so that the decomposed oil can be cooled uniformly. Furthermore, as the blended oil is recirculated, the apparatus for producing oil from waste plastic can be provided as one capable of improving the purity of a purified product.

Furthermore, the apparatus for producing oil from waste plastic is configured such that a screw-type heat-generating plate is provided on a spindle as well as a heat-generating member made of an electroconductive steel product heats a solvent, decomposed oil, blended oil, and the like, thereby allowing a heating fluid being flowed to be evenly heated up to a predetermined temperature.

Therefore, the apparatus for producing oil from waste plastic can be provided as an environmentally-friendly apparatus because it does not require any additional cooling equipment as well as any heating member such as a gas burner to save facility and energy costs.

## Claims

1. A method of manufacturing oil by thermal decomposition of waste plastic with a high temperature solvent heated sufficiently to separate refined oil from the waste plastic, to obtain refined oil from the waste plastic, wherein
depositing waste plastic into a thermal decomposition chamber having an output port for decomposed oil provided with a closable gate for separating intact plastic and solid impurities from the decomposed oil;
heating said solvent in a first circulation device capable of heating and storing the solvent ;
flowing the high-temperature solvent continuously from the first circulation device to the thermal decomposition chamber until the waste plastic is completely decomposed in the thermal decomposition chamber; and
supplying purified lower-temperature blended oil from a second circulation device, the lower-temperature blended oil being supplied to the thermal decomposition chamber to cool down the decomposed oil.

2. The method for producing oil from waste plastic according to claim 1, wherein the first circulation device comprises a heating device, a circulation chamber for storing the solvent, and a circulation channel for flowing heated solvent to the thermal decomposition chamber, and wherein
the second circulation chamber is disconnectable from both the circulation chamber and the heating device.

3. The method for producing oil from waste plastic according to claim 2, wherein
both of the thermal decomposition chambers are employed to dissolve the waste plastic deposited into each thermal decomposition chamber in the solvent heated at a predetermined temperature to produce decomposed oil;
while cooling down one of the thermal decomposition chambers, the other of the thermal decomposition chambers allows the solvent to be heated by the heating device and to be circulated through the circulation chamber to carry out thermal decomposition of additionally-introduced waste plastic; and
all of decomposed oil and solid impurity are drawn from a separator while being cooled down to a predetermined temperature by the lower-temperature blended oil.

4. An oil-producing apparatus, which thermally decomposes waste plastic in a high-temperature solvent to obtain refined oil from the waste plastic, comprising:
a thermal decomposition chamber that receives the high-temperature solvent and receives the introduction of waste plastic, where the thermal decomposition chamber is connected to a first circulation device having a function of moving a solvent in a thermal decomposition chamber and a second circulation device capable of supplying lower-temperature blended oil from a product-receiving chamber storing the purified blended oil, wherein
a circulation chamber capable of storing a solvent having a capacity about 10 times higher than that of the thermal decomposition chamber, a first heating device for heating the solvent up to a predetermined temperature, and a pump are arranged as common instruments for each of the first circulation device and the second circulation device, and a separating device for separating the decomposed oil from solid impurities is connected to an output port for decomposed oil of the thermal decomposition chamber through a closable gate.

5. The apparatus for producing oil from waste plastic, according to claim 4, wherein
two thermal decomposition chambers are placed and connected to the first circulation device and the second circulation device, respectively, in a switchable manner.

6. The apparatus for producing oil from waste plastic, according to claim 5, further comprising:
a second heating device for heating the decomposed oil, provided as a device for purifying the decomposed oil out of the separating device; and
an evaporation chamber having a device for enlarging the surface area of the decomposed oil heated by the second heating device.

7. The apparatus for producing oil from waste plastic, according to claim 6, wherein
the first heating device and the second heating device are provided as devices for controlling heating temperatures, having: a heat-generating member arranged in the heating chamber, provided with a screw-type heat-generating plate on a spindle, and made of an electroconductive steel product; and a control device arranged on the outside of the heating chamber and provided for supplying a predetermined electric power to the heat-generating member on the basis of information about temperature from a temperature sensor arranged on the outlet side of a heating fluid in the heating chamber.

8. The apparatus for producing oil from waste plastic, according to claim 7, wherein
a plurality of the heat-generating members is arranged in parallel to the direction of flow in the heating chamber and placed at positions that divide the inside of the heating chamber almost evenly.
